(19) **Europäisches Patentamt**

**European Patent Office**

**Office européen des brevets**

(11) Veröffentlichungsnummer: **0 149 233**
**B1**

(12) **EUROPÄISCHE PATENTSCHRIFT**

(45) Veröffentlichungstag der Patentschrift:
**23.08.89**

(21) Anmeldenummer: **84116246.4**

(22) Anmeldetag: **22.12.84**

(51) Int. Cl.⁴: **B 27 B 9/04**

(54) **Handsäge mit einer schwenkbaren Grundplatte.**

(30) Priorität: **11.01.84 DE 3400662**

(43) Veröffentlichungstag der Anmeldung:
**24.07.85 Patentblatt 85/30**

(45) Bekanntmachung des Hinweises auf die Patenterteilung:
**23.08.89 Patentblatt 89/34**

(84) Benannte Vertragsstaaten:
**DE FR GB IT**

(56) Entgegenhaltungen:
**GB-A-2 011 834**
**US-A-2 346 961**
**US-A-4 078 309**

(73) Patentinhaber: **ROBERT BOSCH GMBH, Postfach
50, D-7000 Stuttgart 1 (DE)**

(72) Erfinder: **Bader, Richard, Geisbacher Strasse 7,
D-7118 Künzelsau (DE)**
Erfinder: **Kuhlmann, Gerhard, Hohewartstrasse 74,
D-7000 Stuttgart 30 (DE)**
Erfinder: **Haas, Wolfgang, Alemannenweg 4,
D-7022 Leinfelden (DE)**
Erfinder: **Schilling, Rainer, Friedrichsberg 15,
D-7000 Stuttgart 80 (DE)**
Erfinder: **Vogel, Eberhard. Dipl.- Ing.(FH),
Rosswiesenstrasse 11, D-7405 Dettenhausen (DE)**
Erfinder: **Maisenbacher, Heinz, Spemannstrasse 38,
D-7000 Stuttgart 1 (DE)**

## Beschreibung

### Stand der Technik

Die Erfindung geht aus von einer Handsäge nach der Gattung des Hauptanspruchs. Es ist schon eine solche Handsäge bekannt geworden, bei der eine Kante der Grundplatte als Ablesemarke für die Abstandsskala des Parallelanschlages dient und zum Sägen nach Anriß mindestens eine Schnittmarke an einer anderen Kante der Grundplatte angebracht ist. Mit dem Schwenken der Grundplatte werden, infolge einer einfachen Schwenklagerung, die Schnittstellen verlagert. Für die meisten gebrauchten Sägeschnitte - senkrecht zur Grundplatte oder um 45° zur Grundplatte geneigt - sind deshalb zwei Schnittmarken am Grundplattenrand angebracht. Je größer die Grundplatte gewählt ist, um eine sichere Führung auf der Werkstückoberfläche zu gewährleisten umso weiter weg von der Schnittstelle sind auch die Schnittmarken. Das führt zu Unsicherheiten beim Sägen nach Anriß. Beim Ablesen der Skala des Parallelanschlags an der Grundplattenkante ergeben sich Parallaxen-Fehler, weil die Skala um die Dicke der Führungsstange des Parallelanschlags über der Grundplattenkante liegen.

Bei einer anderen bekannten Handsäge ist die Schnittmarke als eine runde Sichtöffnung in der Grundplatte erweiterndes Schlitzpaar ausgebildet. Das Schwenksystem dieser Handsäge ist so ausgelegt, daß sich die Schnittstellen beim Schwenken der Grundplatte nicht verlagern. Dennoch ergeben sich auch hier Schwierigkeiten beim Sägen nach Anriß, weil beim schrägen Sägen die Schnittkanten an der Oberfläche des Werkstücks weiter auseinander liegen. Auch bei dieser anderen bekannten Handsäge gibt es parallaktische Ablesefehler beim Einstellen des Parallelanschlags.

Beiden vorbekannten Systemen haftet der Nachteil an, daß zum Einstellen des Parallelanschlags nach seiner Skala und zum Sägen nach Anriß Marken an verschiedenen Stellen der Grundplatte gesucht werden müssen. Zudem ist das Ablesen der Einstellung 0 an der weit neben der eigentlichen Schnittfläche gelegenen Grundplattenkante nicht sinnfällig.

### Vorteile der Erfindung

Die erfindungsgemäße Handsäge mit den kennzeichnenden Merkmalen des Hauptanspruchs hat demgegenüber den Vorteil, daß an ein und derselben Stelle sowohl die Schnittmarken zum Sägen nach Anriß als auch die Ablesemarken zum Einstellen des Parallelanschlags nach seiner Skala angeordnet sind. Dabei stimmen die Schnittmarken und die Ablesemarken überein. Dies ergibt auch sinnfällig beim Einstellen der Abstandsskala auf 0, das die 0-Marke mit der Schnittmarke übereinstimmt. Beim Ablesen der Abstandsskala gibt es keinen Parallaxen-Fehler, weil die Ablesemarken in der Abstandsskala und die diesen zugeordneten Bezugsmarken in einer Ebene liegen. Das freie Umfeld an den Schnittmarken erlaubt ein schnelles Wiederfinden des Anrisses, wenn der Sägende einmal mit seiner Schnittmarke vom Anriß abgekommen ist.

Durch die in den Unteransprüchen aufgeführten Maßnahmen sind vorteilhafte Weiterbildungen und Verbesserungen der im Hauptanspruch angegebenen Handsäge möglich. Besonders vorteilhaft für einen genauen Sägeschnitt nach Anriß ist die Ausbildung der als Schnittmarken dienenden Schlitze mit verschiedener Breite, entsprechend dem verschiedenen Abstand der Schnittkanten an der Oberfläche des Werkstückes, beim senkrechten und beim schrägen Sägen.

### Zeichnung

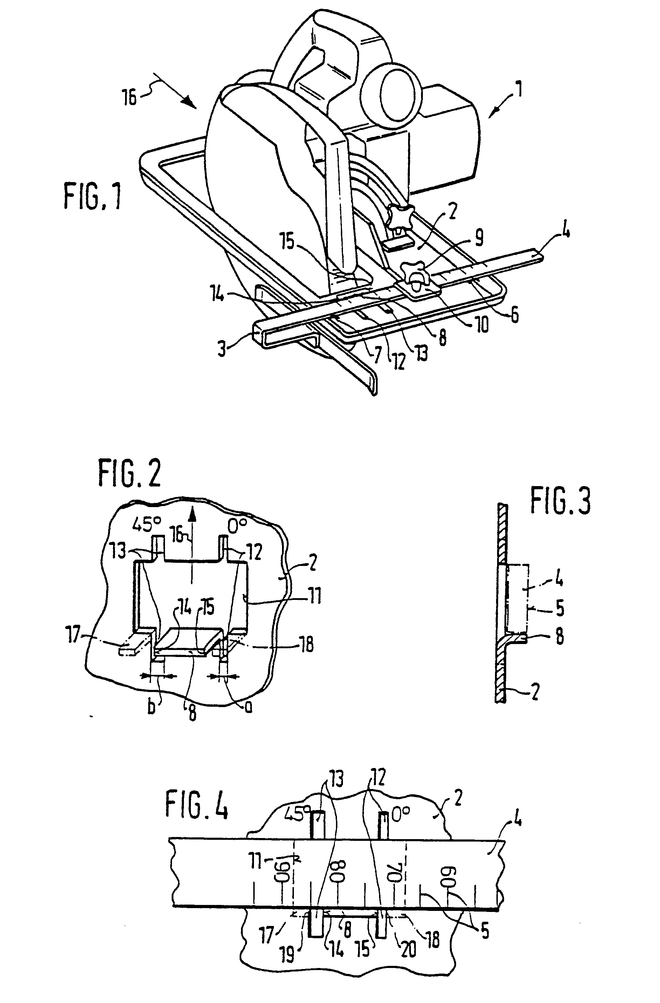

Ein Ausführungsbeispiel des Erfindungsgegenstandes ist in der Zeichnung dargestellt und in der nachfolgenden Beschreibung näher erläutert. Es zeigen Figur 1 eine perspektivische Darstellung einer erfindungsgemäß ausgestatteten Handkreissäge, Figur 2 einen Ausschnitt aus einer Grundplatte gemäß Figur 1 in vergrößerter, perspektivischer Darstellung, Figur 3 eine Seitenansicht zu Figur 2, im Schnitt und Figur 4 eine Draufsicht des gleichen Details wie Figur 2 mit auf die Grundplatte gelegter Führungsstange des Parallelanschlags.

### Beschreibung des Ausführungsbeispiels

Eine Handkreissäge 1 mit einer schwenkbar an ihr befestigten Grundplatte 2 trägt auf dieser Grundplatte 2 einen Parallelanschlag 3. Dieser Parallelanschlag 3 besitzt eine Führungsstange 4 die mit einer Abstandsskala 5 versehen ist. Die Führungsstange 4 ist mittels Nocken 6 und 7 und eines Anschlages 8 an der Grundplatte 2 geführt. Eine Feststellschraube 9 kann über eine Platte 10 die Führungsstange des Parallelanschlags 3 auf der Grundplatte 2 festklemmen. Der Anschlag 8 ist gebildet durch einen aus einer viereckigen Öffnung 11 in der Grundplatte 2 herausgebogenen Lappen (stark gezeichnet in den Figuren 1 bis 4). Dieser Anschlag 8 ist begrenzt durch die Ränder zweier Schlitzpaare 12 und 13. Er ragt um die Dicke der Führungsstange 4 über die Oberfläche der Grundplatte 2 hinaus und hat als Ablesemarken 14 und 15 dienende Kanten. Pfeile 16 geben die Schnittrichtung der Kreissäge 1 an. Die Schlitzpaare 12 und 13, die als Schnittmarken dienen, sind mit Abstand von den Kanten der Öffnung 11 angeordnet, die parallel zu der durch die Pfeile 16 angegebenen Schnittrichtungen verlaufen. Das Schlitzpaar 12 hat die Breite a und dient dem Sägen nach Anriß bei rechtwinkliger Stellung der Grundplatte 2 zum Kreissägeblatt. Dabei entspricht die Schnittbreite der Breite a des Schlitzpaares 12. Das Schlitzpaar 13 hat die Breite b. Es dient als Schnittmarke zum Sägen nach Anriß bei um 45° geschwenkter Grundplatte 2. Die Breite b entspricht der Breite des Einschnittes in die Oberfläche des Werkstücks mit dem um 45° schräg gestellten Kreissägeblatt. Man kann also beim Führen der Handkreissäge 1 nach einem Anriß auf der Werkstückoberfläche entscheiden, ob das Werkstück rechts oder links der Anrißlinie oder zu beiden Seiten der Anrißlinien gleich weit eingeschnitten werden soll. Im letzteren Falle ist die Anrißlinie in der Mitte des jeweiligen Schlitzpaares zu halten. Will man diese Entscheidung über die Lage des Schnittes auch beim Einstellen des Parallelanschlages 3 treffen können, so ist der Anschlag 8 um in den Figuren 2 und strichpunktiert eingezeichnete Lappen 17 und 18 zu ergänzen. Dies kann ohne Mehrkosten im gleichen Arbeitsgang geschehen wie das Ausbiegen des Anschlags 8. Auf diese Weise entstehen weitere Ablesemarken 19 und 20. Weil die Oberkanten des Anschlags 8 und der Lappen 17 und 18 in der gleichen Ebene wie die Abstandsskala 5 liegen, sind durch Parallaxe entstehende Einstellfehler für den Parallelanschlag 3 ausgeschlossen.

Durch die vorbeschriebene Gestaltung der Handkreissäge 1 wird die viereckige Öffnung 11 in der Grundplatte 2 mit sie erweitertenden Schlitzpaaren 12 und 13, dem Anschlag 8 und den Lappen 17 und 18 zum Ablesezentrum für das Führen der Handkreissäge 1 sowohl beim Schnitt nach einem Anriß als auch mittels des Parallelanschlags 3. Dabei ist dieses Ablesezentrum auf einfachste Weise herstellbar und daher billig. Die Vorteile der erfindungsgemäßen Gestaltung müssen danach nicht teuer erkauft werden.

## Patentansprüche

1. Handsäge mit einer schwenkbaren Grundplatte, einem Parallelanschlag mit einer Abstandsskala und mindestens einer Schnittmarke zum Führen der Handsäge nach einem Anriß, dadurch gekennzeichnet, daß die Grundplatte (2) eine viereckige Öffnung (11) hat, die durch zwei in Schnittrichtung verlaufende, Schnittmarken bildende Schlitze (12, 13) erweitert ist und an mindestens einer seiner quer zur Sägerichtung verlaufenden Kanten durch einen über die Oberfläche der Grundplatte (2) hinausragenden Anschlag (8, 17, 18) begrenzt ist.

2. Handsäge nach Anspruch 1, dadurch gekennzeichnet, daß die die Schnittmarken bildenden Schlitze einander gegenüberliegende, in Schnittrichtung verlaufende Schlitzpaare (12, 13) sind.

3. Handsäge nach Anspruch 1, dadurch gekennzeichnet, daß die die Schnittmarken bildenden Schlitze (12, 13) mit Abstand von parallel zur Schnittrichtung (16) verlaufenden Begrenzungskanten der viereckigen Öffnung (11) in der Grundplatte (2) angeordnet sind.

4. Handsäge nach Anspruch 1, dadurch gekennzeichnet, daß die die Schnittmarken bildenden Schlitze (12, 13) die Lage des Schnittes bei rechtwinklig zum Sägeblatt (0°) und bei in einem Winkel von 45° zum Sägeblatt eingestellter Grundplatte (2) angeben.

5. Handsäge nach einem der Ansprüche 1 und 4, dadurch gekennzeichnet, daß die die Schnittmarken bildenden Schlitze (12, 13) durch ihre Breite (a, b) den Abstand der Schnittbegrenzungskanten angeben und deshalb der Schlitz (13) zum Anzeigen des Schnittes bei unter einem von der Normalstellung (0°) abweichenden Winkel eingestellter Grundplatte (2) breiter ist als der Schlitz (12) zum Anzeigen des Schnittes bei rechtwinklig (0°) zum Sägeblatt eingestellter Grundplatte (2).

6. Handsäge nach Anspruch 1, dadurch gekennzeichnet, daß der Anschlag (8, 17, 18) aus der viereckigen Öffnung (11) heraus abgewinkelt ist.

7. Handsäge nach Anspruch 6, dadurch gekennzeichnet, daß der Anschlag (8) ein Lappen zwischen den zwei die Schnittmarken bildenden Schlitzen (12, 13) ist.

8. Handsäge nach Anspruch 6, dadurch gekennzeichnet, daß der Anschlag durch drei Lappen (8, 17, 18) gebildet ist, die die Schlitze (12, 13) begrenzen.

9. Handsäge nach Anspruch 1, dadurch gekennzeichnet, daß der Anschlag (8, 17, 18) in seiner Höhe der Dicke der Führungsstange des Parallelanschlags (3) mit der Abstandskala (5) entspricht, so daß seine Kanten Ablesemarken (14, 15, 19, 20) für die Abstandsskala (5) bilden, die mit dieser in der gleichen Ebene liegen.

## Claims

1. Hand saw with a tiltable base plate, a parallel stop having a distance scale, and at least one cutting mark to guide the hand saw according to a scribed marking, characterized in that the base plate (2) has a rectangular opening (11) which is widened by two slots (12, 13) running in the cutting direction and forming cutting marks, and, at at least one of its edges running transversely to the sawing direction, is defined by a stop (8, 17, 18) protruding above the surface of the base plate (2).

2. Hand saw according to Claim 1, characterized in that the slots forming the cutting marks are pairs of slots (12, 13) located opposite one another and running in the cutting direction.

3. Hand saw according to Claim 1, characterized in that the slots (12, 13) forming the cutting marks are arranged at a distance from boundary edges of the rectangular opening (11) in the base plate (2) which run parallel to the cutting direction (16).

4. Hand saw according to Claim 1, characterized in that the slots (12, 13) forming the cutting marks indicate the position of the cut when the base plate (2) is set at right angles to the saw blade (0°) and when it is set at an angle of 45° to the saw blade.

5. Hand saw according to either of Claims 1 and 4, characterized in that the slots (12, 13) forming the cutting marks, by their widths (a, b), indicate the distance between the boundary edges of the cut, and therefore the slot (13) for showing the cut when base plate (2) is set at an angle deviating from the normal position (0°) is wider than the slot (12) for showing the cut when base plate (2) is set at right angles (0°) to the saw blade.

6. Hand saw according to Claim 1, characterized in that the stop (8, 17, 18) is angled out of the rectangular opening (11).

7. Hand saw according to Claim 6, characterized in that the stop (8) is a lug between the two slots (12, 13) forming the cutting marks.

8. Hand saw according to Claim 6, characterized in that the stop is formed by three lugs (8, 17, 18) which define the slots (12, 13).

9. Hand saw according to Claim 1, characterized in that the stop (8, 17, 18), in its height, corresponds to the thickness of the guide bar (4) of the parallel stop (3) having the reading scale (5), so that its edges form reading marks (14, 15, 19, 20) for the distance scale (5) which lie with the latter in the same plane.


## Revendications

1. Scie a main avec une plaque de base inclinable, une butée parallèle avec une échelle graduée des distances et au moins un repère de coupe pour le guidage de la scie à main après une entaille, caractérisée en ce que la plaque de base (2) a une ouverture quadrangulaire (11) qui est élargie par deux fentes (12, 13) constituant des repères de coupe s'étendant dans la direction de coupe et est délimitée sur au moins un des bords s'étendant transversalement à la direction de sciage par une butée (8, 17, 18) faisant saillie en dehors de la surface de la plaque de base (2).

2. Scie à main selon la revendication 1, caractérisée en ce que les fentes constituant les repères de coupe sont des paires de fentes situées en regard (12, 13) qui s'étendent dans la direction de coupe.

3. Scie à main selon la revendication 1, caractérisée en ce que les fentes (12, 13) constituant les repères de coupe sont disposées à quelques distances de bords de délimitation de l'ouverture quadrangulaire dans la plaque de base (2) qui s'étendent parallèlement à la direction de coupe (16).

4. Scie à main selon la revendication 1, caractérisée en ce que les fentes (12, 13) constituant les repères de coupe indiquent la position de la coupe pour une plaque de base (2) réglée perpendiculairement à la lame de scie et avec un angle de 45° par rapport à la barre de scie.

5. Scie à main selon l'une des revendications 1 et 4, caractérisée en ce que les fentes (12, 13) constituant les repères de coupe indiquent par leur largeur (a, b) la distance des bords de délimitation de coupe et, en conséquence, la fente (13) d'indication de la coupe pour une plaque de base (2) réglée suivant un angle s'écartant de la position normale (0°) est plus large que la fente (12) d'indication de la coupe avec une plaque de base (2) réglée perpendiculairement à la lame de scie.

6. Scie à main selon la revendication 1, caractérisée en ce que la butée (8, 17, 18) est pliée à angle droit hors de l'ouverture quandrangulaire (11).

7. Scie à main selon la revendication 6, caractérisée en ce que la butée (8) est une patte disposée entre les deux fentes (12, 13) constituant les repères de coupe.

8. Scie à main selon la revendication 6, caractérisé en ce que la butée est constituée par trois pattes (8, 17, 18) qui délimitent les fentes (12, 13).

9. Scie à main selon la revendication 1, caractérisée en ce que la butée (8, 17, 18) a une hauteur qui correspond à l'épaisseur de la tige de guidage (4) de la butée parallèle (3) avec l'échelle graduée des distances (5) de telle sorte que ses bords constituent des repères de lecture (14, 15, 19, 20) pour l'échelle graduée des distances (5) qui se trouve dans le même plan que ceux-ci.

FIG.1

16

1

15

2

9

4

14

10

6

3

8

7  12  13

FIG.2

45°  16  0°

13  12

2

11

17  14  15  18

b  8  a

FIG.3

4

5

8

2

FIG.4

13  12

2

45°  0°  4

11  90  80  70  60  5

17  8  18

19  14  15  20